# EUROPÄISCHE PATENTSCHRIFT

(11) **EP 4 320 662 B1**
(45) Veröffentlichungstag und Bekanntmachung des Hinweises auf die Patenterteilung: **09.04.2025**
(21) Anmeldenummer: 22709570.0
(22) Anmeldetag: 07.02.2022
(51) Int. Cl.: H01M 8/04089, F16K 31/12, H01M 8/04746

(54) **ABSPERRVORRICHTUNG FÜR DEN REZIRKULATIONSKREIS EINES BRENNSTOFFZELLENSTAPELS**
SHUT OFF DEVICE FOR THE ANODE RECIRCULATION LOOP OF A FUEL CELL STACK
DISPOSITIF D'ÂRRET DANS UN BOUCLE DE RECIRCULATION D'UNE PILE À COMBUSTIBLE

(30) Priorität: 07.04.2021 DE 102021108577
(43) Veröffentlichungstag der Anmeldung: 14.02.2024
(73) Patentinhaber: Schaeffler Technologies AG & Co. KG, 91074 Herzogenaurach (DE)
(72) Erfinder: PFANNENMUELLER, Jan, 90489 Nürnberg (DE); POPP, Markus, 96158 Frensdorf (DE)
(86) Internationale Anmeldenummer: PCT/DE2022/100100
(87) Internationale Veröffentlichungsnummer: WO 2022/214120

(56) Entgegenhaltungen:
- DE-A1- 102016 118 532
- US-A1- 2009 155 092

## Beschreibung

Die Erfindung betrifft eine Absperrvorrichtung für den Rezirkulationskreis eines Brennstoffzellenstapels mit einer Wasserstoffzuführung, einer Rezirkulationsgaszuführung und einer Purgeleitung.

Brennstoffzellen wandeln die chemische Energie eines Brennstoffs durch eine Reaktion mit Sauerstoff (in der Regel aus der Luft) in Elektrizität um. Meist wird Wasserstoff als Brennstoff verendet. Wir werden daher im Weiteren immer "Wasserstoff" für den Brennstoff oder Kraftstoff verwenden, schließen aber andere gasförmige Brennstoffe wie Butan, Propan, Methan, Methanol oder andere Kohlenwasserstoffe explizit mit ein.

Bekannt sind Niedertemperaturbrennstoffzellen mit einem ionenleitenden Polymerelektrolyten, der eine Anode von einer Kathode trennt. Der Wasserstoff wird dem Anodenraum zugeführt, der Sauerstoff dem Kathodenraum. Die Wasserstoffionen wandern durch den Elektrolyten, die Elektronen wandern über einen elektrischen Stromkreis und einen Verbraucher außerhalb der Zelle. Solche PEM-Brennstoffzellen werden auch Polymerelektrolytbrennstoffzellen, Poylmer Electrolyte Fuel Cells, PEFC, Protonenaustauschmembranbrennstoffzellen, Proton Exchange Membran Fuel Cells, PEMFC oder Feststoffpolymerbrennstoffzellen, Solid Polymer Fuel Cells, SPFC genannt. Da eine Brennstoffzelle normalerweise eine Spannung von nur ca. 1 V erzeugt, werden in der Regel mehrere Zellen zu Stapeln oder sogenannten Stacks verbunden, um insgesamt eine höhere Spannung zu erreichen.

Wasserstoffbrennstoffzellen werden im Betrieb überstöchiometrisch mit Wasserstoff versorgt, das heißt, sie verbrauchen nicht den gesamten Wasserstoff im Anodenraum, da sich sonst flüssiges Wasser und Inertgase ansammeln würden. Um den überflüssigen Wasserstoff nicht zu verschwenden, wird er recycelt, also einer Rezirkulation zugeführt. Hierzu gibt es die Möglichkeit, den Wasserstoff aktiv mit einer mechanischen Pumpe oder einem Gebläse im Kreis zu führen. Dies ist zum Beispiel aus der WO 2012/104 191 A1 (oder der parallelen US 2013/0344406 A1) bekannt. Diese Vorrichtung weist eine Absperrvorrichtung für den Rezirkulationskreis, eine Wasserstoffzuführung, eine Rezirkulationsgaszuführung und eine Purge- oder Spülleitung auf. Diese Vorrichtung bildet den Oberbegriff des Anspruchs 1.

Möglich ist es auch, den Wasserstoff passiv im Kreis zu führen, indem eine Strahlpumpe mit einer Düse für den frischen Wasserstoff vorgesehen ist, die mit dem höheren Frischwasserstoffdruck den zu recycelnden Wasserstoff mitreißt. Aus der US 2020/0144 642 A1 ist eine solche Wasserstoffversorgung mit passiver Rezirkulation bekannt.

In manchen Betriebssituationen ist es notwendig oder wünschenswert, die Rückführung des Rezirkulationskreislaufes zu unterbinden. Dies erfolgt über ein Absperrventil für den Rezirkulationskreis.

Des Weiteren reichert sich das Rezirkulationsgas über die Betriebszeit mit Stickstoff und anderen nicht erwünschten Gasen an, die je nach Betriebsstrategie von Zeit zu Zeit abgelassen werden müssen. Dies erfolgt über ein Purgeventil beziehungsweise Ablassventil. Beim Purgen oder Ablassen der unerwünschten Gase ist es von Vorteil, wenn die Rezirkulation unterbunden ist.

Zusätzlich ist für den sicheren Betrieb ein Überdruckventil notwendig. Das Ventil öffnet bei einem bestimmten Druck selbständig und schützt somit alle Bauteile vor einer Beschädigung oder gar im extremsten Fall vor dem Bersten.

So sind also drei Ventile notwendig, um einen sicheren Betrieb zu ermöglichen. Dies ist kein zu vernachlässigender Aufwand.

Aufgabe der Erfindung ist es daher, den Aufwand für Ventile für Brennstoffzellen mit Rezirkulationskreis zu verringern.

Die Lösung der Aufgabe erfolgt erfindungsgemäß durch eine Absperrvorrichtung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist also eine Absperrvorrichtung für den Rezirkulationskreis eines Brennstoffzellenstapels vorgesehen mit einer Wasserstoffzuführung, einer Rezirkulationsgaszuführung und einer Purgeleitung, wobei ein Rezirkulationskreisabsperrventil vorgesehen ist, das von einem vorgelagerten Wasserstoffschaltventil geschaltet wird, und in dem ein Purgeventil integriert ist, das auch als Überdruckventil ausgebildet ist.

Erfindungsgemäß sind also drei Ventilfunktionen in einem einzigen Ventil oder Bauteil vereinigt: Absperrventil für den Rezirkulationskreis, Purgeventil und Überdruckventil. Das erspart Kosten und Aufwand für mehrere Ventile und vereinfacht die Ansteuerung erheblich, da nur mehr ein Aktor für alle drei Funktionen notwendig ist. Das erfindungsgemäße Absperrventil eignet sich für Brennstoffzellen mit aktiver und mit passiver Rezirkulation. Die Erfinder haben auch erkannt, dass Purgen und Absperren der Rezirkulation in einem besonderen Verhältnis stehen.

In einer bevorzugten Ausführung ist das vorgeschaltete Wasserstoffschaltventil ein an sich übliches, angesteuertes Ventil, das eine Öffnung öffnet oder schließt. Das eigentliche Rezurkulationskreisabsperrventil ist dagegen ein Schieberventil, dessen Ventilkolben bei seiner Bewegung die etwas größere Leitung teilweise oder ganz verschleißen kann, und gleichzeitig mechanisch das Purgeventil betätigen kann. Ein einziger Aktor reicht dann für das Sperren und Öffnen der Rezirkulationsleitung und der Purgeleitung. Bevorzugt bewegt sich der Schiebekolben quer zur zu öffnenden und zu schließenden Leitung.

Bevorzugt wird das Purgeventil über eine mechanische Verbindung, bevorzugt einen Stößel, betätigt, das heißt geöffnet. Dieser Stößel ist bevorzugt direkt in den Ventilschieber des Rezirkulationskreisabsperrventils integriert. Wird das Rezirkulationskreisabsperrventil geschlossen, öffnet die mechanische Verbindung das Purgeventil automatisch durch die direkte Kopplung mit. Eine Ausführungsvariante des Stößels ist, dass das Purgeventil dann geöffnet wird, wenn das Rezirkulationskreisabsperrventil vollständig geschlossen wird oder ist. Durch unterschiedliche Stößellängen verändert sich der Öffnungszeitpunkt. Bei fester Stößellänge ergibt sich ein festgelegter Öffnungszeitpunkt. So kann, wie hier in den Figuren weiter unten gezeigt, das Purgen beginnen, wenn der Rezirkulationskreis zu 100 % geschlossen ist. Ebenso ist es möglich andere Ausführungsvarianten oder Stößellängen einzusetzen, zum Beispiel, dass das Purgen beginnt, wenn der Rezirkulationskreis zu 50 % geschlossen ist, oder wenn er zu 10 % geschlossen ist.

Bevorzugt sind das Wasserstoffschaltventil und das Purgeventil Sitzventile, die also vollständig dicht sind. Da das Purgeventil bevorzugt auch die Überdruckventilfunktion übernimmt, empfiehlt sich die Ausführung als federvorgespanntes Kugel-Rückschlagventil, wobei die Feder auf den maximal zulässigen Betriebsdruck abgestimmt wird.

Erfindungsgemäß wird das Rezirkulationskreisabsperrventil vom hohen Wasserstoffdruck des Vorrats (zurzeit bis zu 900 bar) angesteuert, wobei der Wasserstoffversorgungsdruck dann den Ventilschieber des eigentlichen Rezirkulationskreisabsperrventils betätigt. Dies kann der volle Vorratsdruck sein, dies kann aber auch ein anderer, niedrigerer Druck sein, der vom Betreiber beliebig vorgegeben ist. In einigen Ausführungen wird mit einem Wasserstoffmitteldruckbereich von zum Beispiel bis zu 25 bar gearbeitet. Das eigentliche Absperrventil, das - gerade bei passiver Rezirkulation - oft einen deutlich größeren Durchmesser hat, wird erfindungsgemäß nicht von einem eigenen elektrischen Aktor, also einer Hilfskraft, bewegt, sondern von einer anderen Kraft sozusagen angestoßen und geöffnet. Hier nutzen die Erfinder die Energie, die im gespeicherten Frischwasserstoff oder in einem Mitteldruckbereich als Druckenergie sowieso vorhanden ist und vor Ort anliegt. Der relativ hohe Druck (Kraft pro Fläche) des Wasserstoffvorrats übt ja, wenn er auf einen Kolben (oder dessen Fläche) trifft, eine relativ hohe Kraft aus und bewegt so auch groß dimensionierte Kolben sicher und zuverlässig. Zusätzlich bewegt das eigentliche Rezirkulationskreisabsperrventil auch noch das Purgeventil, so dass auch dieses keine eigene Ansteuerung braucht.

Zur Nutzung des Wasserstoffdrucks ist hier also das Wasserstoffschaltventil dem Rezirkulationskreisabsperrventil und dem Purgeventil vorgeschaltet. Das Wasserstoffschaltventil kann dann relativ klein sein und kann von einem kleinen Aktor bewegt werden. Dieses vorgeschaltete Ventil schaltet dann den höheren Wasserstoffdruck auf das Rezirkulationskreisabsperrventil. Da der Wasserstoffversorgungsdruck wesentlich größer ist als der Druck im Rezirkulationskreis des Stacks, bewegt sich der eigentliche Ventilschieber des Rezirkulationskreisabsperrventils aufgrund der Druckunterschiede in die Ventilposition "Rezirkulationskreis geschlossen". Das Rezirkulationskreisabsperrventil verschließt den Rezirkulationskreis dann vollständig, trotzdem ist es möglich, das Stack zur selben Zeit mit frischem Wasserstoff zu versorgen und so den Betrieb weiter aufrecht zu halten.

Der Hub und der Querschnitt der drei Ventile sind in weitem Rahmen frei wählbar. Günstig ist es, wenn der Ventilhub des Rezirkulationskreisabsperrventils unabhängig vom Ventilhub oder Ankerhub des Wasserstoffschaltventils und des Purgeventils ist. Da dieses ja sozusagen nur den Anstoß für die Bewegung des Rezirkulationskreisabsperrventils gibt, reicht ein kleiner Ventilhub, den hohen Wasserstoffvorratsdruck auf das Rezirkulationskreisabsperrventil zu lassen, der es dann einen viel größeren Hub verschieben kann.

Auch ist der geschaltete Querschnitt des Rezirkulationskreisabsperrventils unabhängig vom Querschnitt des Wasserstoffschaltventils. Auch ein Schaltventil mit kleiner Bohrung kann den hohen Wasserstoffdruck zum Rezirkulationskreisabsperrventil mit großer Bohrung lassen und so dessen Bewegung bewirken. Der Querschnitt oder die Bohrung des Rezirkulationskreisabsperrventils kann frei gewählt werden und ist zum Beispiel abhängig von den herrschenden Druckverhältnissen zwischen Wasserstoffversorgungsdruck und Rezirkulationskreisdruck im/am Stack.

Die Ansteuerung des Wasserstoffschaltventils kann auf bekannte Weise, zum Beispiel pneumatisch, hydraulisch oder mechanisch erfolgen. Bevorzugt kann die Ansteuerung elektrisch oder elektromagnetisch erfolgen, also zum Beispiel über ein Magnetventil mit Anker in einer Tauchspule.

Möglich ist, dass der Kolben des von einem Aktor bewegten Ventils sowohl in die eine Richtung als auch in die Gegenrichtung aktiv geschoben wird, zum Beispiel vom Stromfluss in die eine Richtung und vom entgegengesetzten Strom in die andere Richtung bewegt wird. In einer bevorzugten Ausführung weisen das Wasserstoffschaltventil und/oder das Rezirkulationskreisabsperrventil und/oder das Purgeventil aber je einen Rückstellmechanismus auf, bevorzugt je eine integrierte Rückstellfeder. Dieses rückstellende Bauelement veranlasst dann eine Bewegung in die Gegenrichtung. Bevorzugt werden das oder die rückstellenden Elemente oder Federn das eine, zwei oder alle drei Ventile je in die sogenannte Fail-Safe- oder ausfallsichere Position verschieben. Das heißt, dass zum Beispiel die Rückstellfeder des Wasserstoffschaltventils dieses in die Geschlossenstellung drückt, so dass bei Stromausfall oder einer anderen Störung in der Steuerung das Wasserstoffschaltventil geschlossen ist, und damit das nachgeordnete Rezirkulationskreisabsperrventil geöffnet lässt und so den normalen Rezirkulationskreislauf offenhält. Ebenso heißt das, dass zum Beispiel die Rückstellfeder des Rezirkulationskreisabsperrventils dieses in die Geöffnetstellung drückt, so dass bei Stromausfall oder einer anderen Störung in der Steuerung das Rezirkulationskreisabsperrventil offen ist, also den normalen Rezirkulationskreislauf offen lässt. Dies wird durch zwei Federn erreicht. Die Fail-Safe-Position des Purge- und Überdruckventils ist geschlossen, um den Normalbetrieb unter leichtem Überdruck aufrecht zu erhalten.

Bei den Ausführungen mit zwei hintereinander geschalteten Ventilen, wobei eines, hier das Wasserstoffschaltventil, angesteuert wird, und das andere, hier das Rezirkulationskreisabsperrventil, dann vom Hochdruckgasstrom in die Geschlossenstellung verschoben wird, empfiehlt es sich, einen Mechanismus vorzusehen, der das zweite Ventil nach einiger Zeit wieder in die Ausgangsstellung gleiten lässt. Dies kann eine kleine Bohrung sein, die den Druck nach Schließen des ersten Ventils ablässt und es so erlaubt, dass das zweite Ventil, das Rezirkulationskreisabsperrventil, nach einer gewissen Zeit wieder in seine Grundstellung gelangt. In einer bevorzugten Ausführung weist der Ventilschieber des Rezirkulationskreisabsperrventils eine gewisse Leckage auf, das heißt, sein Ventilschieber dichtet nicht vollständig zum Gehäuse hin, sodass das eingebrachte Gas entweicht, und der Ventilschieber zum Beispiel durch seine Rückstellfeder selbständig zurückfährt. Ohne diese Leckage würde kein Druckausgleich stattfinden. Dies kann durch ein erhöhtes Führungsradialspiel und/oder durch eine Bohrung und/oder durch eine Entlastungsnut erfolgen.

Soll die Brennstoffzelle ein Fahrzeug antreiben, so muss der Wasserstoff mitgenommen und in einer Art Tank gespeichert werden. Dazu wird er entweder flüssig oder unter Druck gelagert. Da für die Flüssiglagerung extrem tiefe Temperaturen (maximal einige Kelvin) notwendig sind, hat sich derzeit die Lagerung unter Druck (bis ca. 900 bar) durchgesetzt. Dies erfordert Ventile, die auch für diesen hohen Druckbereich ausgelegt sind. Hier sind oft starke Verstellelemente oder Aktoren notwendig, um Bewegungen gegen diese Drücke durchzuführen. In einer bevorzugten Ausführung der Erfindung wird daher ein Wasserstoffschaltventil eingesetzt, das eine Druckkompensation des Ventilkolbens (oder des Ankers bei Magnetventilen) aufweist und damit die Verstellkräfte deutlich reduziert. Man kann deshalb mit leichteren und schwächeren Aktoren arbeiten. In dieser Ausführung der Erfindung sind daher eine oder mehrere Überströmbohrungen im Gehäuse und/oder im Aktor vorgesehen, die Hochdruckwasserstoff auf die andere Seite des Ventilkolbens gelangen lassen und so nur eine niedrigere Verstellkraft benötigen. Möglich ist es auch, eine oder mehrere Längsnuten im Kolben oder Anker vorzusehen. Besonders sinnvoll ist eine Druckkompensation im Ankerendanschlag.

Um die Absperrfunktion gegen den recht hohen Wasserstoffdruck zuverlässig und vollständig erfüllen zu können, kann vorgesehen sein, dass dem Wasserstoffschaltventil und/oder dem Purgeventil je ein abdichtender Ventilsitz zugeordnet ist. So kann zum Beispiel im vorderen Anschlag des Aktors ein Sitzventil vorgesehen sein. Der Sitz kann ein Kegelsitz oder eine plane Ventilfläche sein. Es können auch Dichtelemente vorgesehen sein, wie ein oder mehrere O-Ringe, umspritzte Sitze oder ein umspritzter Ventilschieber.

Die Erfinder haben erkannt, dass beim Purgen keine Rezirkulation stattfinden soll oder braucht. Daher können beide Funktionen mit dem hier vorgeschlagenen einzigen Ventil gleichzeitig gesteuert werden, das heißt, wenn die Rezirkulation gestoppt wird, kann das Purgen beginnen. Und wenn das Purgen beendet ist kann die Rezirkulation wieder beginnen. Das Purgen ohne Rezirkulation hat den Vorteil, dass erstmal Gas mit hohem Stickstoffgehalt abgelassen wird. Es findet keine Vermischung mit frischem Wasserstoff statt, dies steigert den Gesamtwirkungsgrad.

In einer Ausführung ist dem Purgeventil eine Hubüberwachung zugeordnet. Diese Überwachung detektiert die Auslösung des Ventils, zum Beispiel durch Überwachung des Ventilhubes, eines Ventilkolbens oder bei Verwendung einer Kugel des Kugelhubes. Hierdurch erfolgen eine Funktionsüberwachung des Purgens (bei aktiviertem Schaltventil) und die Überwachung der Überdruckventilfunktion (bei ausgeschaltetem Schaltventil). Dank der integrierten mehrfachen Funktionen kann so auch die Schaltfunktionalität der Rezirkulationsabsperrung überprüft werden. Eine Kolben- oder Kugelhubüberwachungssensorik kann zum Beispiel mittels eines Hall-Sensors, eines Reedkontaktes oder einer Übergangswiderstandsmessung realisiert sein. Die Öffnung des Purgeventils kann auch indirekt überwacht werden, zum Beispiel durch Druckmessung mittels eines Drucksensors im Auslass oder durch eine Wasserstoffüberwachung im Auslass. Eine Ventilöffnung wird dann durch Drucksteigerung oder erhöhten Wasserstoffgehalt angezeigt.

In einer bevorzugten Ausführung weist das Rezirkulationskreisabsperrventil eine pneumatische Endlagendämpfung für eine oder beide Endstellungen beider Hubrichtungen auf.

Die erfindungsgemäße Absperrvorrichtung kann aus jedem geeigneten Material hergestellt sein. Das Material muss den dort herrschenden mechanischen Belastungen und Temperaturen Stand halten. So empfiehlt sich Metall oder Kunststoff als vorherrschender Werkstoff für die Kolben, Gehäuse und Leitungen. Für Dichtungen elastische Werkstoffe.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine erfindungsgemäße Absperrvorrichtung an einer Wasserstoffeinspritzvorrichtung eines Brennstoffzellenstapels und
Fig. 2 bis 5 die Absperrvorrichtung der Fig. 1 in vier unterschiedlichen Schaltzuständen.

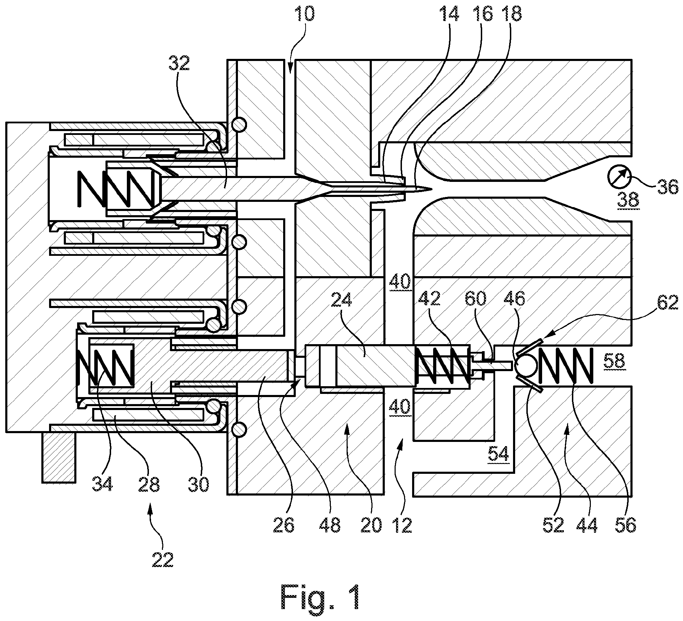

Fig. 1 zeigt eine erfindungsgemäße Absperrvorrichtung an einer Wasserstoffeinspritzvorrichtung eines Brennstoffzellenstapels mit passiver Rezirkulation. Die Wasserstoffeinspritzvorrichtung enthält eine Wasserstoffzuführung 10, eine Rezirkulationsgaszuführung 12, und eine Strahlpumpe 14 mit Düse 16 und Düsennadel 18. Die Strahlpumpe 14 spritzt frischen Wasserstoff aus der Wasserstoffzuführung 10 über die Düse 16 ein. Dieser unter hohem Druck stehende und daher schnelle Wasserstoff reißt Rezirkulationsgas aus der Rezirkulationsgaszuführung 12 und dem Rezirkulationskreis 40 Richtung Gasauslass 38 zum Anodenraum des Stacks mit, wodurch die passive Rezirkulation in Gang gehalten wird. Die Gase mischen sich im Saugraum vor der Düse 16 und gelangen durch ein Mischrohr und einen Diffusor zum Gasauslass 38. Das Wasserstoffregelventil 32 wird von einen Linearaktor mit Elektromagnet hin- und herbewegt und regelt so die Menge des zugeführten Frischwasserstoffes. Ein Drucksensor 36 misst den Gasdruck am Anodenraum und gibt so ein Maß für die erforderliche Wasserstoffmenge.

Unterhalb der Wasserstoffeinspritzvorrichtung, aber hier im gleichen Gehäuse integriert, befinden sich die wesentlichen Bauteile der erfindungsgemäßen Absperrvorrichtung für den Rezirkulationskreis 40, nämlich das Wasserstoffschaltventil 22 mit Ventilkolben oder Ventilschieber 26, das Rezirkulationskreisabsperrventil 20 mit Ventilkolben oder Ventilschieber 24 und das Purgeventil 44.

Das Wasserstoffschaltventil 22 ist mit einem Linearaktor 28, zum Beispiel einem Elektromagneten, ausgerüstet, der über einen Anker 30 den Ventilschieber 26 hin und her bewegen kann. Der Ventilschieber 26 des Wasserstoffschaltventils 22 wird von einer Rückstellfeder 34 nach rechts in den rechten Anschlag gedrückt und verschließt dort mit seinem Ventilsitz 48 eine Öffnung, die von der Wasserstoffzuführung 10 zum das Rezirkulationskreisabsperrventil 20 führt (Normally Closed Position). Im Wasserstoffschaltventil 22 befinden sich neben dem Ventilschieber 26 zwei Überströmbohrungen, die für eine Druckkompensation sorgen.

Rechts von der genannten Öffnung befindet sich das Rezirkulationskreisabsperrventil 20, dessen Ventilschieber 24 von einer Rückstellfeder 42 nach links gedrückt wird. In dieser linken Anschlagstellung wäre die Leitung des Rezirkulationskreises 40 zum Stack freigegeben, was zu einer Offenstellung für den Normalbetrieb (Normally Open Position) führt. In Fig. 1 ist der Ventilschieber 24 des Rezirkulationskreisabsperrventils 20 aber nicht in einer seiner beiden Endlagen gezeigt, sondern in einer Zwischenstellung, in der der Ventilschieber 24 des Rezirkulationskreisabsperrventils 20 den Rezirkulationskreis 40 zwischen Rezirkulationsgaszuführung 12 und Stack verschließt. Für den Ventilschieber 24 des Rezirkulationskreisabsperrventils 20 sind zwei Endlagendämpfungen an den Endanschlägen vorgesehen, die bevorzugt pneumatisch arbeiten. Unterhalb der Bohrung für den Ventilschiebers 24 des Rezirkulationskreisabsperrventils 20 befinden sich zwei Längsnuten 46, die Gas am Ventilschieber 24 langsam vorbeiströmen lassen, und als Überströmbohrungen dienen. Am Ventilschieber 24 ist ei Stößel 60 angebracht, der nach rechts Richtung Purgeventil 44 reicht.

Ganz rechts befindet sich das Purgeventil 44. Dieses besitzt eine Ventilkugel 46, die von einer Feder 56 in einen Ventilsitz 52 gepresst wird. Das Purgeventil 44 ist in einer Purgeleitung 54, die vom Rezirkulationskreis 40 zu einem Auslass 58 ins Freie führt, angeordnet. Gleichzeitig ist es direkt in der Nähe des Rezirkulationskreisabsperrventils 20 angeordnet, sodass der Stößel 60 eine mechanische Übertragung der Bewegung des Ventilschiebers 24 auf die Kugel 46 bewirken kann. Beim Schließen des Rezirkulationskreisabsperrventils 20 bewegt sich der Ventilschieber 24 nach rechts, verschließt die Leitung des Rezirkulationskreises 40 und überträgt diese Bewegung, wenn sie weit genug ist, über seinen Stößel 60 auf die Kugel 46. Damit hebt der Stößel 60 die Kugel 46 von ihrem Ventilsitz 52 ab und öffnet so das Purgeventil 44. Da in dieser Ausführung die Kugel 46 des Purgeventils 44 auch eine Fläche hat, die über die Leitung 54 den Druck in der Leitung 40 (und damit im Stack) registriert, wirkt das Purgeventil 44 auch als Überdruckventil. Bei Ansteigen des Druckes im Stack, im Kreis 40 oder in der Leitung 54 über ein voreingestelltes Maß hinaus hebt dieser Druck die Kugel 46 von ihrem Ventilsitz 52 und lässt den Überdruck über den Auslass 58 ins Freie entweichen.

In der Nähe der Kugel 46 befindet sich eine Hubüberwachung 62, die die Stellung der Kugel 46 detektiert und der Steuerung meldet.

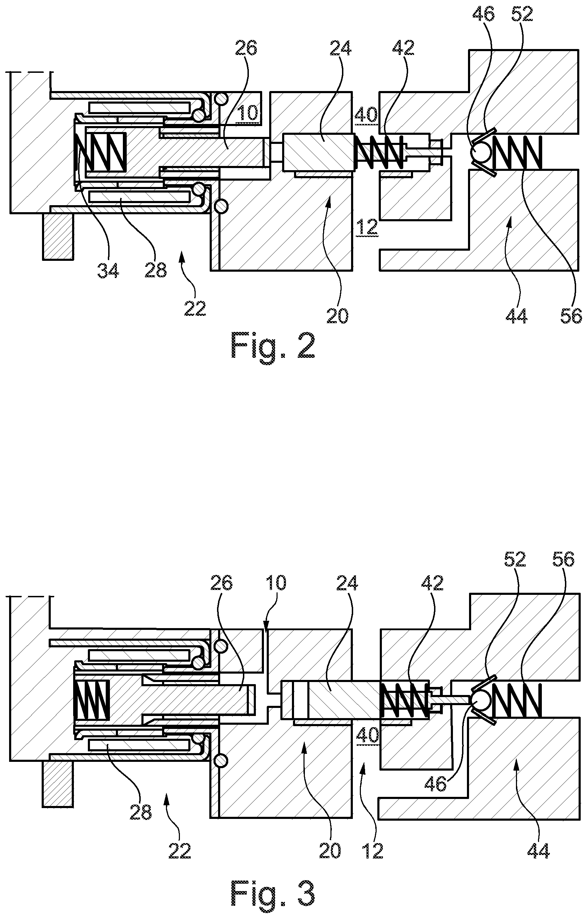

Fig. 2 bis 5 zeigen zur Erklärung der Wirkungsweise die Absperrvorrichtung der Fig. 1 in vier unterschiedlichen Schaltzuständen.

Fig. 2 zeigt die fail-Safe Position der drei Ventile Wasserstoffschaltventil 22, Rezirkulationskreisabsperrventil 20 und Purgeventill 44, also die Ruhestellung, wenn alles stromlos ist. Da der Linearaktor 28 nicht arbeitet, drückt die Rückstellfeder 34 den Ventilschieber 26 des Wasserstoffschaltventils 22 in die rechte Endlage, wo der Ventilschieber 26 die Öffnung zum Rezirkulationskreisabsperrventil 20 verschließt. Das Wasserstoffschaltventil 22 ist also geschlossen. Das Hochdruckwasserstoffgas kann dann nicht von der Wasserstoffzuführung 10 zum Rezirkulationskreisabsperrventil 20 gelangen.

Die zweite Rückstellfeder 42 drückt den Ventilschieber 24 des Rezirkulationsabsperrventils 20 in die linke Endlage, so dass der Ventilschieber 24 den Rezirkulationskreis 40 offen lässt. Das Rezirkulationskreisabsperrventil 20 ist also geöffnet. Das Rezirkulationsgas kann so von der Rezirkulationsgaszuführung 12 nach oben zur Wasserstoffeinspritzvorrichtung und damit zum Stack gelangen.

Das Purgeventil 44 ist geschlossen (fail-safe). Die Feder 56 drückt die Kugel 46 gegen den Ventilsitz 52.

Fig. 3 zeigt die drei Ventile Wasserstoffschaltventil 22, Rezirkulationskreisabsperrventil 20 und Purgeventil 44 in einer anderen Stellung. Der Linearaktor 28 ist nun bestromt und zieht den Ventilschieber 26 des Wasserstoffschaltventils 22 etwas nach links, sodass der Ventilschieber 26 die Öffnung zum Rezirkulationskreisabsperrventil 20 öffnet. Das Wasserstoffschaltventil 22 ist also geöffnet. Das Hochdruckwasserstoffgas kann so von der Wasserstoffzuführung 10 zum Rezirkulationskreisabsperrventil 20 gelangen.

Dieses Hochdruckgas (oder der Wasserstoffversorgungsdruck) drückt den Ventilschieber 24 des Rezirkulationsabsperrventils 20 gegen die Wirkung der Feder 42 nach rechts, so dass der Ventilschieber 24 den Rezirkulationskreis 40 verschließt. Das Rezirkulationskreisabsperrventil 20 ist also geschlossen. Das Rezirkulationsgas kann so nicht mehr von der Rezirkulationsgaszuführung 12 nach oben zur Wasserstoffeinspritzvorrichtung und damit zum Stack gelangen.

Das Purgeventil 44 ist noch geschlossen. Die Feder 56 drückt die Kugel 46 gegen den Ventilsitz 52.

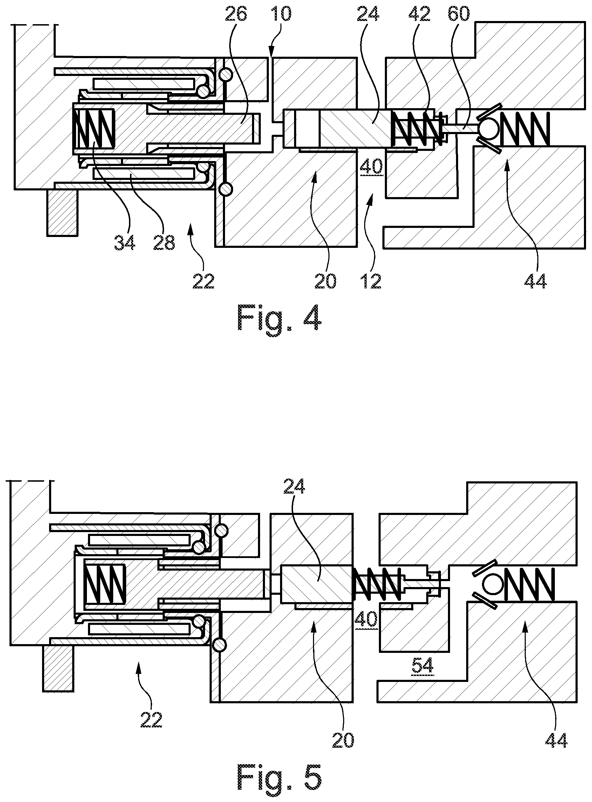

Fig. 4 zeigt die drei Ventile Wasserstoffschaltventil 22, Rezirkulationskreisabsperrventil 20 und Purgeventil 44 wieder in einer anderen Stellung. Der Linearaktor 28 ist nun weiter bestromt und zieht den Ventilschieber 26 des Wasserstoffschaltventils 22 gegen die Wirkung der Feder 34 etwas nach links, sodass der Ventilschieber 26 die Öffnung zum Rezirkulationskreisabsperrventil 20 offen lässt. Das Wasserstoffschaltventil 22 ist also geöffnet. Das Hochdruckwasserstoffgas kann so von der Wasserstoffzuführung 10 zum Rezirkulationskreisabsperrventil 20 gelangen.

Dieses Hochdruckgas (oder der Wasserstoffversorgungsdruck) drückt den Ventilschieber 24 des Rezirkulationskreisabsperrventils 20 gegen die Wirkung der Feder 42 noch weiter nach rechts, so dass der Ventilschieber 24 den Rezirkulationskreis 40 weiter verschlossen hält. Das Rezirkulationskreisabsperrventil 20 ist also geschlossen. Das Rezirkulationsgas kann so nicht mehr von der Rezirkulationsgaszuführung 12 nach oben zur Wasserstoffeinspritzvorrichtung und damit zum Stack gelangen.

Gleichzeitig ist der Ventilschieber 24 so weit nach rechts gedrückt, dass er über seinen Stößel 60 das Purgeventil 44 öffnet. Das Purgeventil 44 ist offen. Da das Wasserstoffschaltventil 22 offen ist, hält der Druck das Ventil 44 offen. Die von den Nuten verursachte Undichtigkeit wird durch die Zuführung von frischem Wasserstoff kompensiert. Das Rezirkulationskreisabsperrventil 20 und das Purgeventil 44 geöffnet. Wenn jetzt das Wasserstoffschaltventil 22 geschlossen ist, baut sich der Druck vor dem Ventilschieber durch einen Abfluss über die Nuten oder das Radialspiel ab. Je nach der Dimensionierung der Nuten oder des Radialspiels öffnet sich das Rezirkulationskreisabsperrventil 20 schneller oder langsamer. Das Purgeventil 44 schließt sich gleichzeitig mit der Ventilschieberbewegung.

Fig. 5 zeigt die Wirkung des Purgeventils 44 als Überdruckventil 44.

Das Wasserstoffschaltventil 22 ist wie in Fig. 2 stromlos und geschlossen.

Wasserstoffversorgungsdruck liegt links am Ventilschieber 24 des Rezirkulationskreisabsperrventils 20 nicht an. Es ist deshalb wie in Fig. 2 geöffnet.

Der zu hohe Druck im Rezirkulationskreis 40 gelangt über die Purgeleitung 54 an das Purgeventil 44, das nun als Überdruckventil 44 arbeitet, sich öffnet und den Überdruck ablässt.

### Bezugszeichenliste

- 10: Wasserstoffzuführung
- 12: Rezirkulationsgaszuführung
- 14: Strahlpumpe
- 16: Düse
- 18: Düsennadel
- 20: Rezirkulationskreisabsperrventil
- 22: Wasserstoffschaltventil
- 24: Ventilschieber des Rezirkulationskreisabsperrventils
- 26: Ventilschieber des Wasserstoffschaltventils
- 28: Linearaktor
- 30: Anker
- 32: Wasserstoffregelventil
- 34: Rückstellfeder des Wasserstoffschaltventils
- 36: Drucksensor
- 38: Gasauslass zum Stack
- 40: Rezirkulationskreis vom Stack
- 42: Rückstellfeder des Rezirkulationskreisabsperrventil
- 44: Purgeventil/Überdruckventil
- 46: Ventilkugel des Purgeventils
- 48: Ventilsitz des Wasserstoffschaltventils
- 52: Ventilsitz des Purgeventils
- 54: Purgeleitung
- 56: Feder des Purgeventils
- 58: Auslass
- 60: Stößel
- 62: Hubüberwachung

## Patentansprüche

1. Absperrvorrichtung für den Rezirkulationskreis (40) eines Brennstoffzellenstapels mit einer Wasserstoffzuführung (10), einer Rezirkulationsgaszuführung (12) und einer Purgeleitung (54), **dadurch gekennzeichnet, dass** ein Rezirkulationskreisabsperrventil (20) vorgesehen ist, das von einem vorgelagerten Wasserstoffschaltventil (22) geschaltet wird, und in dem ein Purgeventil (44) integriert ist, das auch als Überdruckventil (44) ausgebildet ist.

2. Absperrvorrichtung nach Anspruch 1, **dadurch gekennzeichnet, dass** das Rezirkulationskreisabsperrventil (20) als Schieberventil ausgebildet ist, das mechanisch das Purgeventil (44) betätigt.

3. Absperrvorrichtung nach Anspruch 1 oder 2, **dadurch gekennzeichnet, dass** das Wasserstoffschaltventil (22) elektrisch angesteuert wird.

4. Absperrvorrichtung nach einem der vorhergehenden Ansprüche, **dadurch gekennzeichnet, dass** das Wasserstoffschaltventil (22) und/oder das Rezirkulationskreisabsperrventil (20) und oder das Purgeventil (44) je einen Rückstellmechanismus, bevorzugt je eine integrierte Rückstellfeder (34, 42, 56), aufweisen.

5. Absperrvorrichtung nach einem der vorhergehenden Ansprüche, **dadurch gekennzeichnet**, der Ventilschieber (24) des Rezirkulationskreisabsperrventils (20) eine gewisse Leckage aufweist.

6. Absperrvorrichtung nach einem der vorhergehenden Ansprüche, **dadurch gekennzeichnet, dass** das Purgeventil (44) über eine mechanische Verbindung, bevorzugt einen Stößel (60), betätigt wird.

7. Absperrvorrichtung nach einem der vorhergehenden Ansprüche, **dadurch gekennzeichnet, dass** das Wasserstoffschaltventil (22) und das Purgeventil (44) Sitzventile sind, wobei das Purgeventil (44) bevorzugt ein Kugelrückschlagventil ist.

8. Absperrvorrichtung nach einem der vorhergehenden Ansprüche, **dadurch gekennzeichnet, dass** dem Purgeventil (44) eine Hubüberwachung (62) zugeordnet ist.

9. Absperrvorrichtung nach einem der vorhergehenden Ansprüche, **dadurch gekennzeichnet, dass** das Rezirkulationskreisabsperrventil (20) eine pneumatische Endlagendämpfung für eine oder beide Endstellungen aufweist.

10. Absperrvorrichtung nach einem der vorhergehenden Ansprüche, **dadurch gekennzeichnet, dass** sie im Wesentlichen aus Metall oder aus Kunststoff hergestellt ist.

## Claims

1. A shut-off device for the recirculation loop (40) of a fuel cell stack, having a hydrogen inlet (10), a recirculation gas inlet (12) and a purge line (54), **characterised in that** a recirculation loop shut-off valve (20) is provided which is switched by an upstream hydrogen switching valve (22) and in which a purge valve (44) is integrated, which is also designed as a pressure relief valve (44).

2. The shut-off device according to claim 1, **characterised in that** the recirculation loop shut-off valve (20) is designed as a slide valve which mechanically actuates the purge valve (44).

3. The shut-off device according to claim 1 or 2, **characterised in that** the hydrogen switching valve (22) is electrically controlled.

4. The shut-off device according to any one of the preceding claims, **characterised in that** the hydrogen switching valve (22) and/or the recirculation loop shut-off valve (20) and/or the purge valve (44) each have a return mechanism, preferably an integrated return spring (34, 42, 56).

5. The shut-off device according to any one of the preceding claims, **characterised in that** the valve slide (24) of the recirculation loop shut-off valve (20) has a certain leakage.

6. The shut-off device according to any one of the preceding claims, **characterised in that** the purge valve (44) is actuated via a mechanical connection, preferably a tappet (60).

7. The shut-off device according to any one of the preceding claims, **characterised in that** the hydrogen switching valve (22) and the purge valve (44) are seat valves, the purge valve (44) preferably being a ball check valve.

8. The shut-off device according to any one of the preceding claims, **characterised in that** a stroke monitoring unit (62) is associated with the purge valve (44).

9. The shut-off device according to any one of the preceding claims, **characterised in that** the recirculation loop shut-off valve (20) has a pneumatic end position damping for one or both end positions.

10. The shut-off device according to any one of the preceding claims, **characterised in that** it is produced substantially of metal or plastic.

## Revendications

1. Dispositif d'arrêt pour la boucle de recirculation (40) d'une pile à combustible comportant une alimentation en hydrogène (10), une alimentation en gaz de recirculation (12) et une conduite de purge (54), **caractérisé en ce qu'**une vanne d'arrêt de boucle de recirculation (20) est prévue, laquelle est commutée par une vanne de commutation d'hydrogène (22) en amont et dans laquelle est intégrée une vanne de purge (44), qui est également conçue comme une soupape de surpression (44).

2. Dispositif d'arrêt selon la revendication 1, **caractérisé en ce que** la vanne d'arrêt de boucle de recirculation (20) est conçue comme un robinet-vanne qui actionne mécaniquement la vanne de purge (44).

3. Dispositif d'arrêt selon la revendication 1 ou 2, **caractérisé en ce que** la vanne de commutation d'hydrogène (22) est commandée électriquement.

4. Dispositif d'arrêt selon l'une quelconque des revendications précédentes, **caractérisé en ce que** la vanne de commutation d'hydrogène (22) et/ou la vanne d'arrêt de boucle de recirculation (20) et/ou la vanne de purge (44) présentent chacune un mécanisme de rappel, de préférence un ressort de rappel intégré (34, 42, 56).

5. Dispositif d'arrêt selon l'une quelconque des revendications précédentes, **caractérisé en ce que** le robinet-vanne (24) de la vanne d'arrêt de boucle de recirculation (20) présente une certaine fuite.

6. Dispositif d'arrêt selon l'une quelconque des revendications précédentes, **caractérisé en ce que** la vanne de purge (44) est actionnée par une liaison mécanique, de préférence un coulisseau (60).

7. Dispositif d'arrêt selon l'une quelconque des revendications précédentes, **caractérisé en ce que** la vanne de commutation d'hydrogène (22) et la vanne de purge (44) sont des vannes à siège, la vanne de purge (44) étant de préférence un clapet anti-retour à bille.

8. Dispositif d'arrêt selon l'une quelconque des revendications précédentes, **caractérisé en ce que** la vanne de purge (44) est dotée d'une surveillance de course (62).

9. Dispositif d'arrêt selon l'une quelconque des revendications précédentes, **caractérisé en ce que** la vanne d'arrêt de boucle de recirculation (20) présente un amortissement pneumatique de fin de course pour une position finale ou les deux.

10. Dispositif d'arrêt selon l'une quelconque des revendications précédentes, **caractérisé en ce qu'**il est essentiellement fabriqué en métal ou en matière plastique.
